(19) Europäisches Patentamt
European Patent Office
Office européen des brevets

(11) **EP 4 492 020 A1**

(12) **EUROPEAN PATENT APPLICATION**
published in accordance with Art. 153(4) EPC

(43) Date of publication:
**15.01.2025 Bulletin 2025/03**

(21) Application number: **22931029.7**

(22) Date of filing: **06.12.2022**

(51) International Patent Classification (IPC):
**G01J 4/04** (2006.01)     **G01N 21/21** (2006.01)

(52) Cooperative Patent Classification (CPC):
**G01J 4/04; G01N 21/21**

(86) International application number:
**PCT/JP2022/044844**

(87) International publication number:
**WO 2023/171058 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.03.2022   JP 2022034965**

(71) Applicant: **Toray Industries, Inc.
Tokyo 103-8666 (JP)**

(72) Inventors:
• **KUMAGAI, Yukihisa
Otsu-shi, Shiga 520-8558 (JP)**
• **SUGIHARA, Hiroki
Otsu-shi, Shiga 520-8558 (JP)**
• **TAKEMOTO, Kyoya
Otsu-shi, Shiga 520-8558 (JP)**

(74) Representative: **Hoefer & Partner Patentanwälte
mbB
Pilgersheimer Straße 20
81543 München (DE)**

(54) **POLARIZATION EVALUATION DEVICE**

(57)    In order to provide a polarization evaluation device capable of performing polarization evaluation excluding the polarization characteristics of an optical system, in the present invention,

there is provided a polarization evaluation device including:

an optical system including an illumination unit that irradiates an observation target with illumination light for observation, and an imaging unit that acquires polarization images in a plurality of specific directions from reflected light that is the illumination light reflected by the observation target; and

an image processing unit that outputs a result of evaluating polarization characteristic of the observation target from the polarization images in the plurality of specific directions acquired by the imaging unit,

in which

the image processing unit includes:

a correction coefficient calculation unit that generates a correction coefficient for removing a polarization noise based on polarization characteristics of the optical system excluding the observation target;

a correction coefficient storage unit that stores the correction coefficient; and

a polarization characteristic evaluation unit that performs processing that involves creating corrected polarization images produced from the polarization images in the plurality of specific directions by removing the polarization noise on the basis of the correction coefficient and outputting a result of evaluating the polarization characteristics of the observation target from the corrected polarization images.

Fig. 1

# EP 4 492 020 A1

## Description

### TECHNICAL FIELD

The present invention relates to a technique for correcting an error due to the polarization characteristics of irradiation light when performing polarization distribution measurement of a target by polarized light observation.

### BACKGROUND ART

In recent years, polarization evaluation has been utilized as a technique for measuring fiber orientation for guaranteeing the stability of a nonwoven fabric sheet, a carbon fiber composite material, or the like, and as a technique for measuring strain of a film, glass, plastic, or the like. For example, Patent Document 1 discloses a technique for measuring a fiber direction of a carbon fiber material of a test object using a polarization direction of light reflected by the test object by utilizing a fact that when unpolarized light strikes on a carbon fiber, light reflected by the fiber is polarized in a fiber direction.

Commonly, in polarized light observation, the polarization state information of an observation target is acquired by applying a model formula of polarization on the basis of the luminance information of polarization images in a plurality of directions obtained by imaging the observation target.

Methods common as a method for capturing a polarization image are a method of forming polarization images in a plurality of directions by arranging a polarizer in front of an imaging unit and performing imaging while rotating the polarizer, and a method of acquiring polarization images in a plurality of directions at once using an image sensor in which blocks in which polarizers differing from each other in polarization direction are disposed in pixels are arranged in an array manner.

Furthermore, a method of acquiring polarization state information of an observation target by applying a plurality of polarization images to a model formula of polarization has been disclosed. For example, Patent Document 2 discloses an image processing device, an information acquisition device, and an information acquisition method for obtaining a high-quality polarization image.

Because the accuracy of measurement of polarization characteristics depends on the accuracy of polarization images in a plurality of directions, for example, variation in sensitivity among pixels of an image sensor becomes a problem in increasing accuracy of measurement. Therefore, for highly accurate measurement of polarization characteristics, it is necessary to acquire a high-quality polarization image or calibrate sensitivity variation. For example, Patent Document 3 discloses a method for the calibration of a polarizer array for improving the accuracy of measurement of birefringence and polarization characteristics. Furthermore, Patent Document 4 discloses a light receiving device that has high sensitivity but can obtain highly accurate polarization state information even if the light receiving device includes a polarizing element in which absorption components frequently leak.

### PRIOR ART DOCUMENTS

### PATENT DOCUMENTS

Patent Document 1: Japanese Patent No. 6328130
Patent Document 2: Japanese Translation of PCT International Application Publication No. 2015-537211
Patent Document 3: Japanese Patent Laid-open Publication No. 2018-44865
Patent Document 4: Japanese Patent Laid-open Publication No. 2020-80366

### SUMMARY OF THE INVENTION

### PROBLEMS TO BE SOLVED BY THE INVENTION

However, as in Patent Document 3 and Patent Document 4, there is a case where the polarization of an observation target cannot be evaluated with sufficient accuracy only by correcting the sensitivity variation among pixels of an image sensor. In polarized light observation, illumination for observation is applied to an observation target and reflected light or transmitted light from the observation target is acquired by an image sensor. However, in the case, for example, where the illumination light to be applied latently has polarization characteristics, in addition to the polarization state information of the observation target, the polarization state information of the illumination light is also observed by the image sensor, so that the accuracy of evaluation of the polarization characteristics inherent in the observation target is deteriorated.

As described above, in addition to the variation in sensitivity among pixels derived from the image sensor, polarization may exist depending on the components of the optical system. Therefore, as described in Patent Documents 3 and 4, even if an image sensor capable of acquiring a polarization image with high sensitivity is used or the unevenness in sensitivity of the image sensor is calibrated, variation may occur among polarization images due to the polarization characteristics of an optical system other than the image sensor even when, for example, an unpolarized observation target is imaged. This leads to a noise in the evaluation of the polarization characteristics inherent in the observation target, and thus becomes a factor of deterioration in the accuracy of measurement of the polarization characteristics.

In view of such background, an object of the present invention is to provide a polarization evaluation device for performing highly accurate polarization evaluation.

SOLUTIONS TO THE PROBLEMS

The polarization evaluation device of the present invention that solves the above problems mainly has any of the following configurations.

(1) A polarization evaluation device including:

an optical system including an illumination unit that irradiates an observation target with illumination light for observation, and an imaging unit that acquires polarization images in a plurality of specific directions from reflected light that is the illumination light reflected by the observation target; and
an image processing unit that outputs a result of evaluating polarization characteristic of the observation target from the polarization images in the plurality of specific directions acquired by the imaging unit,
in which
the image processing unit includes:

a correction coefficient calculation unit that generates a correction coefficient for removing a polarization noise based on polarization characteristics of the optical system excluding the observation target;
a correction coefficient storage unit that stores the correction coefficient; and
a polarization characteristic evaluation unit that performs processing that involves creating corrected polarization images produced from the polarization images in the plurality of specific directions by removing the polarization noise on the basis of the correction coefficient and outputting a result of evaluating the polarization characteristics of the observation target from the corrected polarization images.

(2) The polarization evaluation device according to (1), in which the polarization evaluation device calculates a polarization angle that is a polarization direction of polarization characteristics of the optical system and a degree of polarization that is an inclusion proportion of a polarization component from a correction image captured in advance, and calculates the correction coefficient from the polarization angle and the degree of polarization.
(3) The polarization evaluation device according to (2), in which the correction image is a plurality of images captured with the observation target being rotated by a plurality of angles.
(4) The polarization evaluation device according to (2), in which the correction image is an image captured by imaging a target having no polarization characteristics.
(5) The polarization evaluation device according to any one of (1) to (4), in which the imaging unit images polarization components in three or more directions.
(6) The polarization evaluation device according to any one of (1) to (5), in which the imaging unit is constituted of an image sensor which includes blocks which are each formed with a plurality of polarizers differing in polarization direction being disposed in respective corresponding pixels, and in which the blocks are arranged in an array manner.
(7) The polarization evaluation device according to any one of (1) to (6), in which the correction coefficient is a coefficient calculated for each pixel constituting the imaging unit.
(8) The polarization evaluation device according to any one of (1) to (7), in which the corrected polarization images are each an image calculated by multiplying a luminance value of each pixel of the polarization image acquired by the imaging unit by the correction coefficient.

EFFECTS OF THE INVENTION

In accordance with the present invention, processing of correcting polarization characteristics of an optical system using correction information acquired in advance is performed on a polarization image. As a result, polarization characteristics can be evaluated with high accuracy because only the polarization characteristics of the observation target can be evaluated.

BRIEF DESCRIPTION OF THE DRAWINGS

[Fig. 1] Fig. 1 is a diagram illustrating one example of a configuration of the polarization evaluation device of the present invention.
[Fig. 2] Fig. 2 is a diagram illustrating one example of a relationship between luminance and a polarization angle.
[Fig. 3] Fig. 3 is a diagram illustrating one example of an image sensor to be used for an imaging unit in the polarization evaluation device of the present invention.
[Fig. 4] Fig. 4 is a diagram for explaining a configuration example of an imaging unit in the polarization evaluation device of the present invention.
[Fig. 5] Fig. 5 is a flowchart illustrating an operation of a correction coefficient calculation unit.
[Fig. 6] Fig. 6 is a flowchart illustrating an operation of a polarization characteristic evaluation unit.
[Fig. 7] Fig. 7 is a diagram for explaining the configuration of the polarization evaluation device used in Example 1 and Example 2.
[Fig. 8] Fig. 8 is a graph showing an error of the polarization angle measured without correcting an error due to the polarization characteristics of the optical system in Example 1.
[Fig. 9] Fig. 9 is a graph showing an error of the polarization angle measured with correction of an error due to the polarization characteristics of the optical system in Example 1.
[Fig. 10] Fig. 10 is a graph showing an error of the polarization angle measured without correcting an error due to the polarization characteristics of the optical system in Example 2.
[Fig. 11] Fig. 11 is a graph showing an error of the polarization angle measured with correction of an error due to the polarization characteristics of the optical system in Example 2.

EMBODIMENTS OF THE INVENTION

[Configuration of polarization evaluation device]

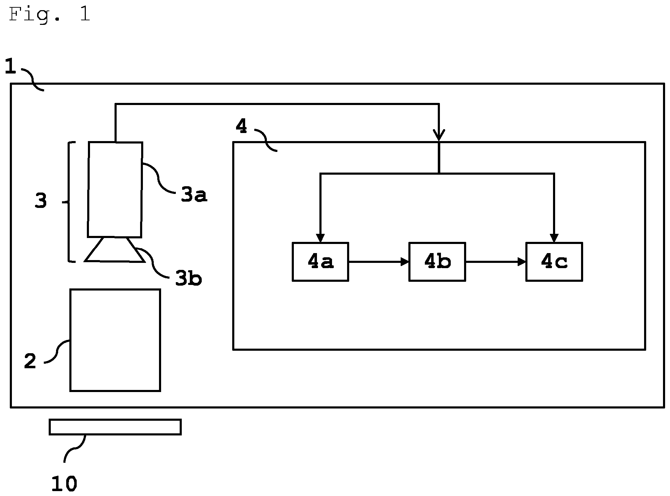

Fig. 1 illustrates a configuration of the polarization evaluation device of the present invention. The polarization evaluation device 1 includes an illumination unit 2 that irradiates an observation target 10 with illumination light for observation; an imaging unit 3 that acquires polarization images in a plurality of specific directions of the reflected light from the observation target 10; and an image processing unit 4 that outputs an image of a result of evaluating polarization characteristics of the observation target 10 from the polarization images in the plurality of directions acquired by the imaging unit 3. Furthermore, the image processing unit 4 includes a correction coefficient calculation unit 4a that generates a correction coefficient for removing a polarization noise based on polarization characteristics of the optical system excluding the observation target 10; a correction coefficient storage unit 4b that stores the correction coefficient; and a polarization characteristic evaluation unit 4c that creates corrected polarization images produced from the polarization images in the plurality of directions by removing the polarization noise on the basis of the correction coefficient, and then outputs a result of evaluating the polarization characteristics of the observation target 10 from the corrected polarization images created.

As the imaging unit 3 in the polarization evaluation device 1, any image sensor, camera lens, or other equipment may be used. As the illumination unit 2 in the polarization evaluation device 1, any illumination may be used. In addition, the irradiation angle of the illumination light with respect to the observation target 10 and the light incident angle from an imaging surface to the image sensor may be arbitrarily set according to the evaluation target and the purpose of the evaluation, and the present invention is not limited by the configuration of the optical system.

[Imaging unit]

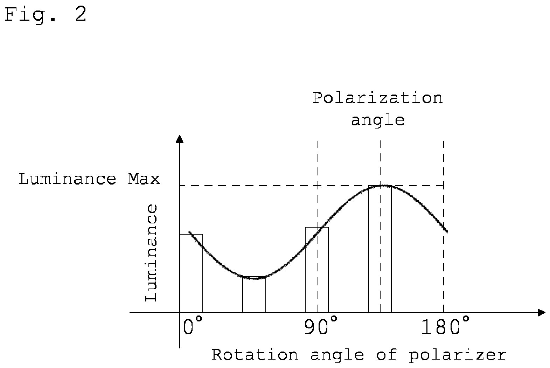

The imaging unit 3 preferably has a configuration capable of acquiring polarization images in three or more directions. Hereinafter, the reason for this will be described.
Measurement of polarization characteristics requires polarization images in a plurality of specific directions. When the observation target 10 is irradiated with light from the illumination unit 2 and reflected light from the observation target 10 is imaged by the imaging unit 3 via a polarizer, the luminance of the captured image of the observation target 10 changes according to the relative phase between the polarization direction of the reflected light from the observation target 10 and the direction of the polarizer. This luminance change is indicated by a sine wave having a cycle of 180° as illustrated in Fig. 2. Therefore, it is possible to obtain a sine wave that reproduces the relationship between the polarizer direction and the luminance of the polarization images in the plurality of specific directions by fitting with a formula of a sine wave having three variables of amplitude, phase, and offset, and then measure polarization characteristics, for example, by defining an angle at which the luminance takes a maximum value in the sine wave obtained by the fitting as the polarization direction (polarization angle) of the reflected light from the observation target. At this time, the acquired polarization images in the three directions preferably include directions having a phase difference of 45° or more in order to maintain fitting accuracy.

From the above, it can be said that the imaging unit 3 preferably has a configuration capable of acquiring polarization images in three or more directions.

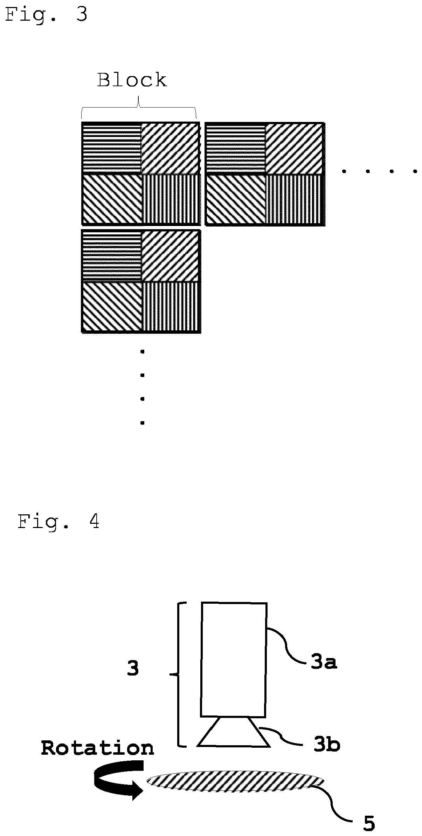

For example, the imaging unit 3 may be configured to use an image sensor in which blocks in which polarizers differing from each other in polarization direction are disposed in pixels are arranged in an array manner. Fig. 3 illustrates an example of an image sensor in which a plurality of blocks is arranged in an array manner, in which the blocks each include $2 \times 2$ pixels in which polarizers having polarization directions differing pixel by pixel (for example, four directions of 0°, 45°, 90°, and 135°) are disposed.

Another example of the imaging unit 3 may be an imaging unit 3 in which a rotatable polarizer 5 is disposed in front of a lens 3b and which is configured such that imaging is repeated with the polarizer 5 being rotated by a plurality of angles. Fig. 4 illustrates an example of the imaging unit 3 having a configuration in which the rotatable polarizer 5 is disposed in front of the lens 3b.

In addition to the configuration illustrated as an example, any image sensor or configuration may be used as long as polarization images in three or more directions can be acquired.

The light incident angle from an imaging surface of the imaging unit 3 to the image sensor may be arbitrarily arranged according to the evaluation target and the purpose of the evaluation.

The captured polarization images in the plurality of directions are output to an image processing unit 4. These polarization images are output to a correction coefficient calculation unit 4a in the case of being used to create a correction coefficient, and are output to a polarization characteristic evaluation unit 4c in the case of being used to measure polarization characteristics, according to the purpose.

[Illumination unit]

The illumination unit 2 irradiates the observation target 10 with illumination light for observation. In the present invention, any illumination may be used because polarization characteristics derived from an optical system are acquired in advance (for example, acquired for each pixel), a correction coefficient for removing the polarization noise is created, and only the polarization characteristics derived from the observation target 10 can be evaluated.

The irradiation angle of the illumination light with respect to the observation target 10 is not specified, and may be arbitrarily set and arranged according to the evaluation target and the evaluation contents. The illumination light is not particularly specified, and light having an arbitrary wavelength may be used.

[Image processing unit]

The image processing unit 4 includes a correction coefficient calculation unit 4a that generates a correction coefficient for removing a polarization noise based on polarization characteristics of the optical system excluding the observation target 10; a correction coefficient storage unit 4b that stores the correction coefficient; and a polarization characteristic evaluation unit 4c that creates corrected polarization images produced from the polarization images in the plurality of directions by removing the polarization noise on the basis of the correction coefficient, evaluates the polarization characteristics of the observation target from the corrected polarization images, and then outputs images.

A polarization image is input from the imaging unit 3 to the image processing unit 4. This polarization image can be input to the correction coefficient calculation unit 4a in the case of being used for calculation of a correction coefficient for correcting a polarization noise of the optical system, and can be input to the polarization characteristic evaluation unit 4c in the case of being used for polarization characteristic evaluation of the observation target 10.

[Correction coefficient calculation unit]

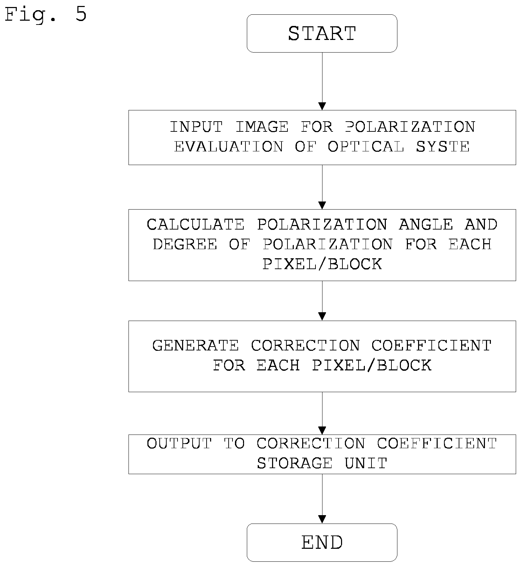

Fig. 5 is a flowchart of the operation of the correction coefficient calculation unit 4a. Polarization images in a plurality of specific directions captured as correction images as described later are input to the correction coefficient calculation unit 4a. The correction coefficient calculation unit 4a calculates polarization characteristics (polarization angle and degree of polarization) of the observation target 10 from the input polarization images in the plurality of specific directions, for example, pixel by pixel and block by block. Then, a correction coefficient is calculated pixel by pixel and block by block from the calculated polarization characteristics, and the calculated correction coefficients are output to the correction coefficient storage unit 4b. Hereinafter, a case where a correction coefficient is calculated and used pixel by pixel will be described, but the same applies to a case where a correction coefficient is calculated and used block by block.

The calculation of the correction coefficient may be performed once for each configuration of the optical system, and the information of the calculated correction coefficient can be repeatedly used for the subsequent polarization characteristic evaluation by storing the information in the correction coefficient storage unit 4b.

The correction image is an image obtained by imaging the correction observation target. The correction observation target may be any target in which the polarization direction among the polarization characteristics of the optical system and the proportion (polarization) of the polarization component of the light incident on the imaging sensor can be clarified. For example, it is preferable to use paper, a resin plate surface-treated so as to be unpolarized, or the like as a correction observation target. In addition, an object that is obvious to return polarized light when reflecting the observation illumination light can be used as a correction observation target. In this case, a plurality of polarization images obtained by imaging the correction observation target while rotating the correction observation target by a constant rotation angle may be used.

Since the method of calculating the correction coefficient varies depending on the correction image to be acquired, the method of calculating the correction coefficient in each case will be described below.

[First mode of correction coefficient creation]

As the correction polarization images, polarization images in a plurality of specific directions captured by imaging an unpolarized target are used. For example, it is preferable to use an image obtained by imaging a target exhibiting uniform polarization characteristics regardless of a place, such as copy paper or a resin plate surface-treated so as to be unpolarized. The amount of illumination light at this time is denoted by 1.

For the acquired polarization images in the plurality of specific directions, a sine wave that reproduces the relationship between the direction $\theta$ of the polarization of the imaging unit 3 and the luminance $I_\theta$ is obtained pixel by pixel by performing fitting, and the angle at which the luminance takes the maximum value in the sine wave obtained by the fitting is calculated pixel by pixel as the polarization direction (polarization angle) of the reflected light from the observation target. In the case of using an image sensor in which a plurality of blocks is arranged in an array manner in which the blocks each include a combination of a plurality of pixels in which polarizers differing pixel by pixel in polarization direction are disposed as illustrated in Fig. 3, a polarization angle is calculated block by block from the fitting, and the results may be applied to each pixel in the blocks. In addition, in the case where polarization images in four directions of 0°, 45°, 90°, and 135° are used as correction images, the polarization angle may be calculated using (Equation 1) where the polarization angle is denoted by $\varphi$ and the luminance of each polarization image is denoted by $I_\theta$.

[Mathematical Formula 1]

$$\emptyset = \frac{1}{2}\cos^{-1}\left(\frac{I_{0°} - I_{90°}}{\sqrt{(I_{45°} - I_{135°})^2 + (I_{0°} - I_{90°})^2}}\right) \qquad \text{(Equation 1)}$$

In addition, using the maximum value $I_{max}$ and the minimum value $I_{min}$ of the sine wave obtained by fitting, the intensity of the polarization component included in the reflected light is calculated as a degree of polarization k pixel by pixel by the calculation formula shown in (Equation 2).

[Mathematical Formula 2]

$$k = \frac{I_{max} - I_{min}}{I_{max}} \qquad \text{(Equation 2)}$$

In addition, using the maximum value $I_{max}$ and the minimum value $I_{min}$ of the sine wave obtained by fitting, the average luminance A of the reflected light is calculated pixel by pixel by the calculation formula shown in (Equation 3).

[Mathematical Formula 3]

$$A = \frac{I_{max} - I_{min}}{2} \qquad \text{(Equation 3)}$$

Next, similarly, polarization images in a plurality of specific directions are acquired for the observation target. The amount of the illumination light at the time of imaging at this time is denoted by I'. For the acquired polarization images in the plurality of specific directions, a sine wave that reproduces the relationship between the polarization direction and the luminance is obtained pixel by pixel by fitting. For the waveform obtained by the fitting, the average luminance A' of the reflected light is calculated pixel by pixel by the calculation formula of (Equation 4).

[Mathematical Formula 4]

$$A' = \frac{I'_{max} - I'_{min}}{2} \quad \text{(Equation 4)}$$

Subsequently, the average luminance A" of the reflected light from the observation target with the normalization of the amount I of the illumination light at the time of imaging the unpolarized target and the amount I' of the illumination light at the time of imaging the observation target is calculated by the calculation formula of (Equation 5).

[Mathematical Formula 5]

$$A'' = A' \times \frac{l'}{Al} \quad \text{(Equation 5)}$$

In addition, the degree of polarization k' for each pixel of the polarization of the optical system included when the observation target is imaged is calculated by the calculation formula of (Equation 6).

[Mathematical Formula 6]

$$k' = k \times A'' \quad \text{(Equation 6)}$$

As described above, the polarization angle φ and the degree of polarization k' of the polarization of the optical system are calculated for each pixel, and the correction information for correcting the polarization noise is calculated pixel by pixel and output to the correction information storage unit 4b.

In the case where the optical system includes polarization characteristics, if the optical system has polarization in a specific direction, the amount of light incident on the image sensor varies depending on the phase difference between the angular component and the polarizer of the imaging unit and the intensity of the polarization component. The correction coefficient is determined on the basis of the degree of polarization k' of the polarization of the optical system and the phase difference between the direction $\theta_i$ of the polarizer of the constituent imaging unit and the polarization angle φ of the polarization of the optical system. The correction coefficient s is calculated for each pixel in accordance with (Equation 7).

[Mathematical Formula 7]

$$s = 1 \Big/ \left( \frac{1 + |k' \cos(\theta_i - \varphi)|}{1 + k'} \right) \quad \text{(Equation 7)}$$

The calculated pixel correction coefficient s is output to the correction information storage unit 4b.

[Second mode of correction coefficient creation]

A target whose reflected light exhibits polarization is imaged as a correction polarization image. For example, it is preferable to image a target whose reflected light is obvious to exhibit polarization, such as a resin plate with a surface hairline-processed. Polarization images in a plurality of specific directions are captured with the target disposed at a certain angle. The method of capturing the polarization images in the plurality of specific directions may be any method as long as the method can acquire polarization images in three or more directions. For example, polarization images in a plurality of specific directions may be acquired by one imaging operation using an image sensor in which blocks in which polarizers differing from each other in polarization direction are disposed in pixels are arranged in an array manner. As another example, as illustrated in Fig. 4, using an imaging unit 3 in which a rotatable polarizer 5 is disposed in front of a lens 3b, imaging may be repeated with the polarizer 5 being rotated by a plurality of angles. Using the polarization images in the plurality of specific directions, a polarization angle φ is calculated from the calculation formula of (Equation 1). Next, the target is rotated, polarization images in a plurality of specific directions are similarly captured, and a polarization angle is calculated. The rotation angle of the target at this time is denoted by ρ. This operation is repeatedly performed with the target being rotated by a plurality of angles, and the results of polarization angle calculation at every rotation angles of the object are acquired.

Originally, the relationship between the rotation angle and the polarization angle of a target linearly changes, but in the case where the optical system has polarization characteristics, distortion occurs in the relationship.

Since the luminance $I_\theta$ of the polarization image for each polarization direction $\theta$ of each imaging unit involves the polarization of the observation target and the polarization of the optical system, the luminance $I_\theta'$ of the polarized light of the reflected light of the observation target is determined by (Equation 8). k and $\varphi$ are variables representing the degree of polarization and the polarization angle of the optical system, respectively.

[Mathematical formula 8]

$$I_\theta' = I_\theta \bigg/ \left( \frac{1 + |k\cos(\theta_i - \varphi)|}{1 + k} \right) \qquad \text{(Equation 8)}$$

Using the luminance $I_\theta'$ of the polarized light of the observation target, the polarization angle $\varphi'$ is recalculated from the calculation of (Equation 1) for each rotation angle of the target. The variables k and $\varphi$ representing the degree of polarization and the polarization angle of the polarization of the optical system are determined by performing least square approximation of the difference between the rotation angle $\rho$ of the target and the recalculated polarization angle $\varphi'$.

From the polarization angle $\varphi$ of each pixel and the degree of polarization k of each pixel of the polarization of the optical system, a correction coefficient for correcting the polarization noise is calculated pixel by pixel according to (Equation 7) and output to the correction information storage unit 4b.

The variables in (Equation 1) to (Equation 8) are summarized as follows.

$\varphi$ Polarization angle
$\theta$ Direction of polarization of imaging unit
$I_\theta$ Luminance of image acquired by imaging unit
$I_\theta'$ Luminance of polarized light in reflected light of observation target
$I_{max}$ Maximum value of sine wave obtained by fitting
$I_{min}$ Minimum value of sine wave obtained by fitting
k Degree of polarization
k' Degree of polarization of the polarization of optical system included when observation target is imaged
l Amount of illumination light when imaging unpolarized target
l' Amount of illumination light when imaging observation target
A Average luminance of reflected light from unpolarized target
A' Average luminance of reflected light from observation target
A" Average luminance of reflected light from observation target with normalization of the amount of illumination light
S Correction coefficient

[Correction coefficient storage unit]

The correction coefficient storage unit 4b stores a correction coefficient of each pixel for removing the polarization characteristics of the optical system calculated in advance by the correction coefficient calculation unit 4a. The correction coefficient information stored in the correction coefficient storage unit 4b at the time of polarization characteristic evaluation is output to the polarization characteristic evaluation unit 4c.

[Polarization characteristic evaluation unit]

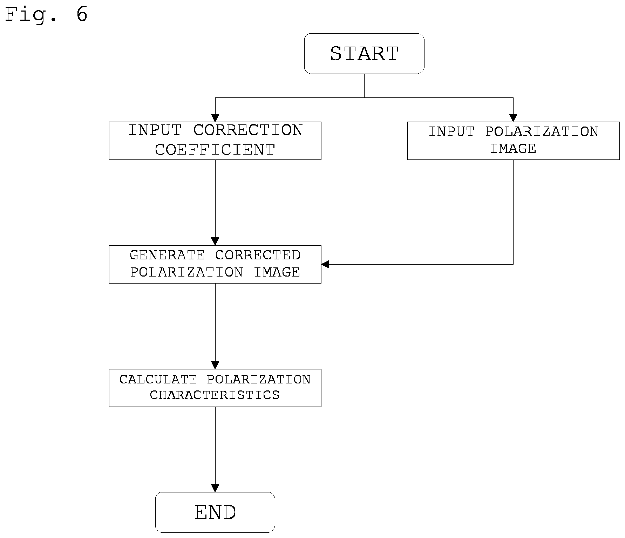

Fig. 6 illustrates a flowchart of the operation of the polarization characteristic evaluation unit 4c. Polarization images in a plurality of specific directions obtained from the imaging unit 3 of the optical system are input to the polarization characteristic evaluation unit 4c. Furthermore, the correction coefficient information of each pixel stored in the correction coefficient storage unit 4b is input. A corrected polarization image is created by multiplying the correction coefficients of the polarization direction and the pixel position of the corresponding imaging unit 3 obtained from the correction coefficient storage unit 4b by the luminance value of each pixel of the input polarization image.

In addition, arbitrary polarization state information is calculated using the corrected polarization image, and the result is output. The calculation result may be output as an image so that the calculation result can be visually recognized. The polarization state information to be calculated may be any information as long as it can be calculated from a plurality of polarization images. For example, the angle at which the luminance takes the maximum value in the sine wave obtained by fitting can be calculated as a polarization angle. In addition, the degree of polarization (the inclusion proportion of the polarization component) of the waveform obtained by fitting can also be calculated by the calculation shown in (Equation 2).

EXAMPLES

The following is description on examples carried out for evidencing the effect of a technique of correcting an error due to polarization characteristics of an optical system when measuring polarization using a device according to one embodiment of the present invention. It is noted that the present invention is not limited to the following examples.

[Example 1]

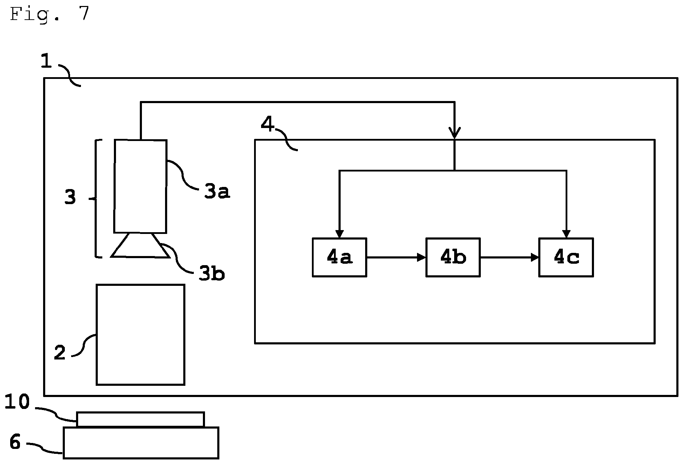

A technique for correcting an error due to the polarization characteristics of an optical system was performed using the optical system illustrated in Fig. 7.

The imaging unit 3 used was an image sensor in which blocks in which polarizers of 0°, 45°, 90°, and 135° were arranged in pixels, respectively, were arranged in an array manner. The illumination unit 2 used was coaxial epi-illumination with a half mirror.

A resin plate (observation target 10) having a hairline surface and being to emit reflected light being to exhibit polarization was placed on a fine movement rotary stage 6, and imaging was performed with the resin plate being rotated from 0 to 180° in 10° increments.

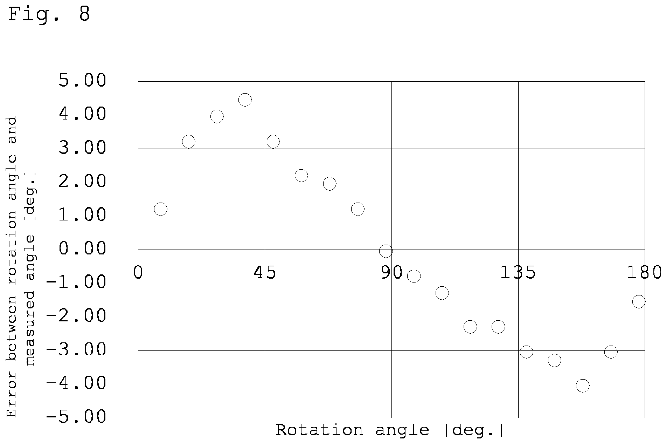

A polarization angle was measured using (Equation 1) for the captured images. In Fig. 8 are shown the rotation angle of the fine movement rotary stage 6 before the correction of the error due to the polarization characteristics of the above-described optical system and the error with the measured polarization angle. As shown in Fig. 8, in the case of measurement without correction, a measurement error of an angle of $\pm 5°$ at most occurred.

This reveals that in the configuration of this optical system, there is a factor that lowers the measurement accuracy in the optical system itself. A conceivable factor is that light is polarized when passing through the half mirror of the illumination unit, so that the illumination light has polarization characteristics.

Next, in order to correct an error due to the polarization characteristics of the above-described optical system, a correction image was acquired using a resin plate whose surface had been matted so as to be unpolarized. Using the acquired correction image, a correction coefficient s was calculated pixel by pixel by the method shown in [First mode of correction coefficient creation] described above, and a correction coefficient distribution was created.

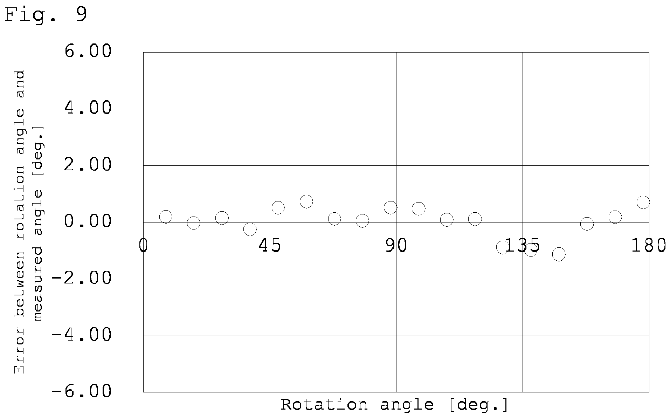

Then, the calculated correction coefficient corresponding to the polarization direction and the pixel position of the imaging unit is multiplied by the luminance value of each pixel of the polarization image obtained by imaging the observation target 10, and a corrected polarization image was thereby created. For this corrected polarization image, the polarization angle was measured again using (Equation 1). In Fig. 9 is shown the relationship between the rotation angle of the fine movement rotary stage after the correction of the error due to the polarization characteristics of the above-described optical system and the error with the measured polarization angle. Although in the case of measurement without correction, a measurement error of an angle of $\pm 5°$ at most occurred (see Fig. 8), it can be seen that the measurement error has well been reduced to a measurement error of an angle of $\pm 1°$ at most as shown in Fig. 9.

From the results of the examples described above, it has been confirmed that according to the present embodiment, the measurement error due to the polarization characteristics of illumination light can be reduced, the polarization state information to be originally measured can be more accurately measured, and the accuracy of polarization angle measurement can be improved by the technique of correcting the error due to the polarization characteristics of the optical system at the time of performing the polarization measurement.

[Example 2]

Using the optical system illustrated in Fig. 7 similarly to Example 1, a resin plate (observation target 10) with a surface that had been hairline-processed so as reflected light exhibits polarization was placed on a fine movement rotary stage 6, and images were captured while the resin plate was rotated from 0 to 180° in 15° increments.

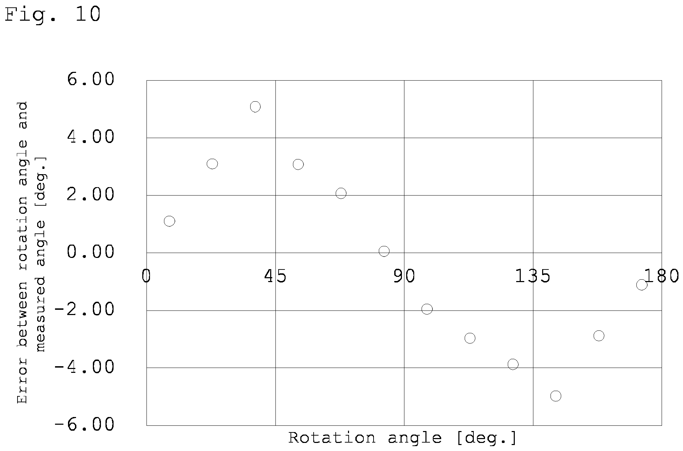

A polarization angle was measured using (Equation 1) for the captured images. In Fig. 10 are shown the rotation angle of the fine movement rotary stage 6 before the correction of the error due to the polarization characteristics of the optical system and the error with the measured polarization angle. As shown in Fig. 10, in the case of measurement without correction, a measurement error of an angle of $\pm 5°$ at most occurred.

Next, in order to correct an error due to the polarization characteristics of the optical system described above, using a plurality of images of the resin plate captured with the resin plate being rotated from 0 to 180° in 15° increments on a fine movement rotary stage 6 as correction images, a correction coefficient s was calculated pixel by pixel by the method described in the [Second mode of correction coefficient creation] described above, and a correction coefficient distribution was created.

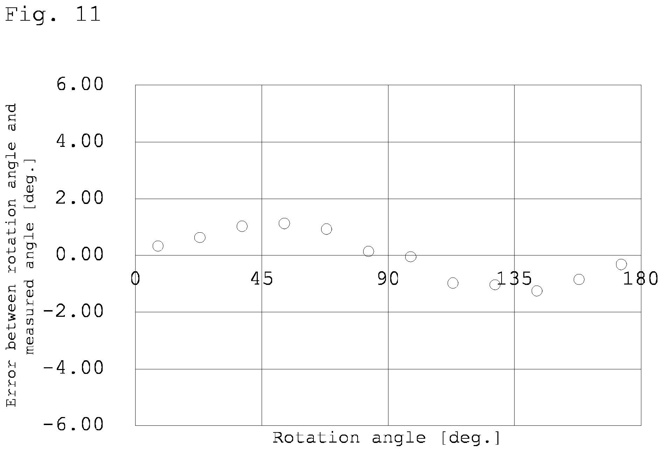

Then, the calculated correction coefficient corresponding to the polarization direction and the pixel position of the imaging unit is multiplied by the luminance value of each pixel of the polarization image obtained by imaging the observation target 10, and a corrected polarization image was thereby created. For this corrected polarization image, the polarization angle was measured again using (Equation 1). In Fig. 11 is shown the relationship between the rotation angle of the fine movement rotary stage after the correction of the error due to the polarization characteristics of the optical system and the error with the measured polarization angle. Although in the case of measurement without correction, a measurement error of an angle of $\pm 5°$ at most occurred (see Fig. 10), it can be seen that the measurement error has well been reduced to a measurement error of an angle of $\pm 1.2°$ at most as shown in Fig. 11.

From the results of the examples described above, it has been confirmed that according to the present embodiment, the measurement error due to the polarization characteristics of illumination light can be reduced, the polarization state information to be originally measured can be more accurately measured, and the accuracy of polarization angle measurement can be improved by the technique of correcting the error due to the polarization characteristics of the optical system at the time of performing the polarization measurement.

INDUSTRIAL APPLICABILITY

With the polarization evaluation device of the present invention, a correction coefficient is created from the polarization characteristics of an optical system acquired in advance, and then by use of the correction coefficient, polarization images obtained by imaging an observation target are subjected to correction processing of the polarization characteristics by the optical system. Therefore, it becomes possible to acquire a polarization image representing only the polarization characteristics of the observation target, and it becomes possible to evaluate the polarization characteristics of the observation target with high accuracy. Therefore, the present invention is particularly suitable for use in a device that performs, for example, highly accurate recognition of fiber orientation.

DESCRIPTION OF REFERENCE SIGNS

1: Polarization evaluation device
2: Illumination
3: Imaging unit
3a: Camera
3b: Lens
4: Image processing unit
4a: Correction coefficient calculation unit
4b: Correction coefficient storage unit
4c: Polarization characteristic evaluation unit
5: Polarizer
6: Fine movement rotary stage
10: Observation target

**Claims**

1. A polarization evaluation device comprising:

an optical system including an illumination unit that irradiates an observation target with illumination light for observation, and an imaging unit that acquires polarization images in a plurality of specific directions from reflected light that is the illumination light reflected by the observation target; and
an image processing unit that outputs a result of evaluating polarization characteristic of the observation target from the polarization images in the plurality of specific directions acquired by the imaging unit,
wherein
the image processing unit includes:

a correction coefficient calculation unit that generates a correction coefficient for removing a polarization noise based on polarization characteristics of the optical system excluding the observation target;
a correction coefficient storage unit that stores the correction coefficient; and

a polarization characteristic evaluation unit that performs processing that involves creating corrected polarization images produced from the polarization images in the plurality of specific directions by removing the polarization noise on the basis of the correction coefficient and outputting a result of evaluating the polarization characteristics of the observation target from the corrected polarization images.

2. The polarization evaluation device according to claim 1, wherein the polarization evaluation device calculates a polarization angle that is a polarization direction of polarization characteristics of the optical system and a degree of polarization that is an inclusion proportion of a polarization component from a correction image captured in advance, and calculates the correction coefficient from the polarization angle and the degree of polarization.

3. The polarization evaluation device according to claim 2, wherein the correction image is a plurality of images captured with the observation target being rotated by a plurality of angles.

4. The polarization evaluation device according to claim 2, wherein the correction image is an image captured by imaging a target having no polarization characteristics.

5. The polarization evaluation device according to any one of claims 1 to 4, wherein the imaging unit images polarization components in three or more directions.

6. The polarization evaluation device according to any one of claims 1 to 5, wherein the imaging unit is constituted of an image sensor which includes blocks which are each formed with a plurality of polarizers differing in polarization direction being disposed in respective corresponding pixels, and in which the blocks are arranged in an array manner.

7. The polarization evaluation device according to any one of claims 1 to 6, wherein the correction coefficient is a coefficient calculated for each pixel constituting the imaging unit.

8. The polarization evaluation device according to any one of claims 1 to 7, wherein the corrected polarization images are each an image calculated by multiplying a luminance value of each pixel of the polarization image acquired by the imaging unit by the correction coefficient.

Fig. 1

Fig. 2

EP 4 492 020 A1

Fig. 3

Block

Fig. 4

3
3a
3b
Rotation
5

14

Fig. 5

```
                          ┌─────────────────┐
                          │      START      │
                          └─────────────────┘
                                   │
                                   ▼
               ┌──────────────────────────────────────┐
               │   INPUT IMAGE FOR POLARIZATION        │
               │   EVALUATION OF OPTICAL SYSTE         │
               └──────────────────────────────────────┘
                                   │
                                   ▼
               ┌──────────────────────────────────────┐
               │  CALCULATE POLARIZATION ANGLE AND     │
               │  DEGREE OF POLARIZATION FOR EACH      │
               │            PIXEL/BLOCK                │
               └──────────────────────────────────────┘
                                   │
                                   ▼
               ┌──────────────────────────────────────┐
               │  GENERATE CORRECTION COEFFICIENT      │
               │      FOR EACH PIXEL/BLOCK             │
               └──────────────────────────────────────┘
                                   │
                                   ▼
               ┌──────────────────────────────────────┐
               │  OUTPUT TO CORRECTION COEFFICIENT     │
               │         STORAGE UNIT                  │
               └──────────────────────────────────────┘
                                   │
                                   ▼
                          ┌─────────────────┐
                          │       END       │
                          └─────────────────┘
```

Fig. 6

START

INPUT CORRECTION COEFFICIENT

INPUT POLARIZATION IMAGE

GENERATE CORRECTED POLARIZATION IMAGE

CALCULATE POLARIZATION CHARACTERISTICS

END

Fig. 7

Fig. 8

Fig. 9

Fig. 10

Fig. 11

## INTERNATIONAL SEARCH REPORT

| International application No. |
|---|
| **PCT/JP2022/044844** |

### A.    CLASSIFICATION OF SUBJECT MATTER

***G01J 4/04***(2006.01)i; ***G01N 21/21***(2006.01)i
FI:    G01J4/04 Z; G01N21/21 Z

According to International Patent Classification (IPC) or to both national classification and IPC

### B.    FIELDS SEARCHED

Minimum documentation searched (classification system followed by classification symbols)

G01J3/00-4/04; G01J7/00-9/04; G01N21/00-21/01; G01N21/17-21/74; G01N21/84-21/958; G01B11/00-11/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | WO 2019/198287 A1 (SONY CORP) 17 October 2019 (2019-10-17) <br> paragraphs [0005]-[0128], fig. 1-11 | 1-3, 5-8 |
| A | | 4 |
| Y | JP 2015-537211 A (FRAUNHOFER-GESELLSCHAFT ZUR FÖRDERUNG DER ANGEWANDTEN FORSCHUNG E.V) 24 December 2015 (2015-12-24) <br> paragraphs [0012]-[0048], fig. 1-3 | 1-3, 5-8 |
| A | | 4 |
| A | JP 2005-337785 A (DAINIPPON SCREEN MFG CO LTD) 08 December 2005 (2005-12-08) <br> paragraphs [0001]-[0069], fig. 1-12 | 1-8 |
| A | CN 112417370 A (UNIV NANJING AERONAUTICS & ASTRONAUTICS) 26 February 2021 (2021-02-26) <br> paragraphs [0001]-[0059], fig. 1 | 1-8 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2023** | **31 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2022/044844** |

**C.    DOCUMENTS CONSIDERED TO BE RELEVANT**

| Category* | Citation of document, with indication, where appropriate, of the relevant passages | Relevant to claim No. |
|---|---|---|
| A | LANE, Connor et al. Calibration of a polarization image sensor and investigation of influencing factors. Applied Optics. 25 October 2021, vol. 61, no. 6, p. C37-C45, <DOI: https://doi.org/10.1364/AO.437391> abstract, "1. INTRODUCTION", "2. MATERIAL AND METHODS" | 1-8 |

Form PCT/ISA/210 (second sheet) (January 2015)

**INTERNATIONAL SEARCH REPORT**
Information on patent family members

International application No.

**PCT/JP2022/044844**

| Patent document cited in search report | | | Publication date (day/month/year) | Patent family member(s) | | | Publication date (day/month/year) |
|---|---|---|---|---|---|---|---|
| WO | 2019/198287 | A1 | 17 October 2019 | US 2021/0152748 A1 paragraphs [0006]-[0173], fig. 1-11 | | | |
| JP | 2015-537211 | A | 24 December 2015 | WO 2014/076128 A2 description, p. 3, line 20 to p. 13, line 36, fig. 1-3 EP 2920579 A2 DE 102012220923 A1 CN 104838255 A | | | |
| JP | 2005-337785 | A | 08 December 2005 | (Family: none) | | | |
| CN | 112417370 | A | 26 February 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6328130 B
- JP 2015537211 W
- JP 2018044865 A
- JP 2020080366 A